Europäisches Patentamt

European Patent Office

Office européen des brevets

(19)

(11) Publication number: 0 205 214
A2

# (12) EUROPEAN PATENT APPLICATION

(21) Application number: 86200962.8

(22) Date of filing: 02.06.86

(51) Int. Cl.⁴: C08G 59/06

(30) Priority: 06.06.85 US 742164

(43) Date of publication of application:
17.12.86 Bulletin 86/51

(84) Designated Contracting States:
BE CH DE FR GB IT LI NL

(71) Applicant: SHELL INTERNATIONALE
RESEARCH MAATSCHAPPIJ B.V.
Carel van Bylandtlaan 30
NL-2596 HR Den Haag(NL)

(72) Inventor: Ming-Kung Li, Simon
15318 El Padre Drive
Houston Texas(US)

(74) Representative: Aalbers, Onno et al
P.O. Box 302
NL-2501 CH The Hague(NL)

(54) Epoxy resin preparation process.

(57) A two stage process for preparing a liquid epoxy
resin by reacting a dihydroxyphenyl hydrocarbon
with an excess of epihalohydrin in the presence of
an aqueous caustic involving the use of an organic
cosolvent only in the second stage which is started
at 40 to 90% conversion of hydroxyl moieties.

EP 0 205 214 A2

## EPOXY RESIN PREPARATION PROCESS

This invention relates to a process for the preparation of a liquid epoxy resin by the base-catalyzed reaction of epichlorohydrin and a dihydroxyphenyl hydrocarbon in an organic solvent or cosolvent medium.

Liquid epoxy resins having a variety of commercial and industrial applications are produced by the base-catalyzed condensation reaction of bisphenol-A with epichlorohydrin in an organic solvent or cosolvent medium. The cosolvent medium is typically a mixture of a ketone or an alcohol and water. The use of a cosolvent promotes rapid glycidation to a chlorohydrin intermediate and dehydrochlorination to the epoxy resin end product. The process produces an epoxy resin product having suitable viscosity and epoxide equivalent weight (EEW) for commercial and industrial applications.

The reaction mixture in this described preparation process requires an excess of epichlorohydrin and large quantities of the cosolvent in order to produce a suitable liquid epoxy resin product. The necessity for such large quantities of epichlorohydrin and cosolvent adds to the energy requirements for separating the organic solvent and unconsumed reactants from the product.

It is therefore an object of the present invention to provide a new method for the preparation of liquid epoxy resins by the base-catalyzed reaction of an epihalohydrin and a dihydroxyphenyl hydrocarbon in an organic solvent medium. It is a further object to reduce the quantity of epihalohydrin necessary for a given product viscosity. It is a further object to reduce the quantity of the cosolvent required for a given product viscosity. It is a further object to reduce the energy requirements for and increase the capacity throughput of a given epoxy resin reaction system.

The invention is concerned with a novel process for preparing a liquid epoxy resin by reacting a dihydroxyphenyl hydrocarbon with an excess of epihalohydrin in the presence of an aqueous caustic, characterized in that the process is carried out in two stages of which in stage (1) the reaction is carried out in the absence of an organic cosolvent and the reaction is effected to yield a product mixture comprising from 10 to 60% unconsumed hydroxyl moieties and of which in stage (2) the reaction is continued in the presence of at least 2.5 mole of organic cosolvent per mole dihydroxyphenyl hydrocarbon.

In the following description the process will be described in terms of the reaction of the preferred starting materials, epichlorohydrin and bisphenol-A. The invention process is particularly suited for the preparation of liquid epoxy resins, which are defined herein as epoxy resins having a viscosity of less than about 250 poises at 25 °C.

The first stage of the process of this invention process involves the preparation of a partially reacted resin mixture of bisphenol-A, an excess of epichlorohydrin, and aqueous caustic. The epichlorohydrin is present in this "pre-reaction mixture" in a molar excess with respect to bisphenol-A, usually at least 4 moles per mole of bisphenol-A, preferably from 6 to 15 moles for most liquid epoxy resins.

The aqueous caustic can be an aqueous solution of a base such as an alkali metal hydroxide. The preferred caustic is sodium or potassium hydroxide. The aqueous caustic is added in an amount of 0.1 to 0.8 mole, preferably from 0.2 to 0.5 mole, per mole of bisphenol-A in the pre-reaction mixture. The concentration of the caustic in aqueous solution can vary depending on the properties of the resin desired, but will generally be from 10 to 25 weight per cent, preferably from 10 to 15 weight per cent in the first stage and 10 to 25 weight per cent in the second stage. The total caustic added in the invention process will generally not exceed 2.5 moles per mole of bisphenol-A. The aqueous caustic added in the first stage will generally be kept to the minimum concentration which will promote the formation of a chlorohydrin intermediate. It is preferred to add less than 1.0 mole, preferably from 0.2 to 0.5 mole, of caustic per mole of bisphenol-A in the first stage.

The preferred manner of carrying out the first stage of the invention method is to mix the bisphenol-A and the epichlorohydrin and then to gradually add the aqueous caustic to this mixture with further mixing over more than 50% of the required reaction period.

The preparation of this pre-reaction mixture will be carried out in the absence of an organic cosolvent. Water will generally be present in the pre-reaction mixture in an amount sufficient to maintain by-product salts in solution. In the pre-reaction mixture obtained at the end of stage (1) from 10 to 60% unconverted hydroxy moieties will remain.

The second stage of the invention epoxy resin preparation method involves the addition of an organic cosolvent to the intermediate product of the first stage and the completion of the reaction of the epoxy resin in this added solvent. The cosolvent can be any suitable essentially inert organic cosolvent for the epichlorohydrin and bisphenol-A reactants, including organic solvents such as alcohols and ketones. Suitable alcohols include $C_1$-$C_8$ saturated aliphatic alcohols, such as methanol, ethanol, propanol isopropyl alcohol and butanol, for example, and suitable ketones include $C_1$-$C_6$ saturated aliphatic ketones. The cosolvent can be added as a mixture of organic solvents, such as alcohols and/or ketones with water. The preferred cosolvent systems for the invention method are mixtures of acetone and water, isopropyl alcohol and water, and t-butanol and water. Preferably the cosolvent will be added in an amount of from 4 to 20 moles, based on moles of bisphenol-A.

The intermediate product mixture of the first stage may be mixed with the organic cosolvent before or after an optional separation of the intermediate product mixture comprising unreacted epichlorohydrin and bisphenol-A and any reaction product from brine present as a result of the formation of an alkali metal halide condensation reaction by-product. The organic phase and the brine may be separated by any suitable method, preferably by static phase separation.

The second stage of the process of this invention is carried out to essentially complete conversion of the hydroxyl moieties to the liquid epoxy resin product.

Stage (2) in which the condensation reaction of the epoxy resin is completed, may include additional addition of the aqueous caustic as the reaction proceeds, with optional brine separation between caustic additions. The amount of aqueous caustic added in the second stage will generally be 60% or greater of the total caustic added, and the total amount of caustic added in the first and second stages will preferably be less than 2.3 moles of base per mole of the dihydroxyphenol.

The reaction product of stage (2) will be a dilute solution of the resin in epichlorohydrin, water and solvent. The resin is recovered by any suitable method such as extraction or evaporation. Dissolved organic materials in the brine, including resin, epichlorohydrin and solvent, can be recovered by suitable means such as extraction or distillation.

The first stage will generally be carried out at a pressure of about 100 to 400 kPa and a temperature of from 60° to 140 °C.

The stage (1) product is dissolved in the cosolvent to a concentration of from 30 to 80 weight per cent, based on the weight of the cosolvent, and the resulting solution is contacted with the aqueous caustic solution under condensation reaction conditions. The second stage is preferably carried out at a pressure of from 100 to 400 kPa and a temperature of from 60 to 90 °C. The products of the second stage are subjected to phase separation, and the organic phase including the epoxy resin product is washed with water to a neutral pH. This may be followed by distillation of volatiles from the washed organic phase to yield the desired epoxy resin product. The second stage preferably includes at least three caustic contacting steps in the presence of the organic cosolvent, with intervening brine removal. Such a process permits operation of the process on an essentially continuous basis.

The invention process involving delayed addition of the solvent requires less epichlorohydrin starting material and solvent for each mole of bisphenol-A as compared with a process in which the starting reactants are present in solvent ab initio and are not pre-reacted in the absence of solvent. The viscosity of the final product is comparable to that achieved in the conventional method, even when prepared in the presence of lesser amounts of epichlorohydrin and solvent. The practice of the invention process can thus lower energy requirements for the process, as a result of lower volumes of excess epichlorohydrin and cosolvent to be separated from the resin product, and increased throughput capacity for a given residence time, from an increase in product quantity relative to reaction mixture quantity.

The epoxy resin preparation process is particularly suited for the preparation of liquid epoxy resin products having a viscosity of about 60 to about 250 poises at 25 °C (as determined by ASTM D-445-74), an EEW of about 170 to about 210 (as determined by ASTM D-1652), and a saponifiable chlorine of about 0.005 to about 0.200 weight per cent. Such liquid epoxy resin products are useful in preparing varnishes and coatings and in sealing and encapsulating electronic components.

Examples of dihydroxyphenyl alkanes that may be employed in lieu of bisphenol-A are 1,2-dihydroxyphenylhexane, 1,4-dihydroxyphenyl cyclohexane, 3,3-dihydroxyphenyloctane, 4,4-dihydroxyphenyldodecane and the like.

The invention is illustrated in detail by the following examples. The first two examples illustrate the preparation of a liquid epoxy resin in a comparison process in which the reactants are not pre-mixed in the absence of an organic cosolvent, so does example 6.

Example 1 (comparative)

Bisphenol-A (BPA) (62.3 g), epichlorohydrin - (ECH) (278.0 g) (11:1 molar ECH to BPA), 222.3 g of acetone (14:1 molar acetone:BPA) and 51.6 g of water were mixed and heated to 70 °C in a 4-neck round-bottom 1-litre flask. This flask was equipped with an air driven stirrer, a thermocouple for temperature indication and a nitrogen line for blanketing. 60.0 g of 20 weight per cent NaOH solution was added through an addition funnel to this well-mixed reaction mass in 8 minutes, and the resulting mixture was agitated for 2 minutes before the brine phase was separated from the organic phase. To the organic phase, a second portion of 20 weight per cent NaOH solution (45.0 g) was added in 6 minutes and the reaction was maintained for 4 minutes before a second separation of the brine from the organic phase was performed. To the organic phase, a third portion of 20 weight per cent NaOH (10.0 g) was added in 2 minutes, followed by 8 minutes hold before a third separation of the brine from the organic phase was performed. Finally, the last portion of the 20 weight per cent NaOH solution (5.0 g) was added to the organic phase in 2 minutes and the resulting mixture was agitated for 8 minutes before the last separation of the brine from the organic phase was performed. The above reaction was conducted under reflux conditions at about 72 °C. The separated organic phase was washed twice with equal volume deionized water to a neutral pH, and the excess ECH, acetone and water were evaporated from the washed resin solution at a terminal condition of less than 10 mm Hg absolute and 175 °C. The resin product had a viscosity of 111.7 poises at 25 °C. Wet analysis gave 189.6 EEW and 0.133 weight per cent saponifiable chlorine (Sap Cl). Analysis by high performance liquid chromatography (HPLC) gave estimated 185.7 EEW and 0.141 weight per cent Sap Cl.

Example 2 (comparative)

100.0 g of BPA, 324.6 g of epichlorohydrin (about 8:1 molar ECH to BPA), 259.1 g of acetone (about 10.2 molar acetone to BPA) and 82.5 g of H₂O were mixed and heated to 72 °C in a similar set-up as in Example 1. 96.5 g of weight per cent NaOH solution was added to this well-mixed reaction mass in 8 minutes followed by 2 minutes hold before brine separation was performed. To the organic phase, a second portion of 20 weight per cent NaOH (72.4 g) was added in 6 minutes and held for 4 minutes before a second brine separation was performed. To the organic phase, a third portion of 20 weight per cent NaOH (16.1 g) was added in 2 minutes, followed by 8 minutes hold before a third brine separation was performed. Finally, the last portion of 20 weight per cent NaOH (8.0 g) was added in 2 minutes to the organic phase and the resulting mixture was held agitated for 8 minutes before the last brine separation. The above reaction was conducted essentially under reflux conditions at about 72 °C. The separated organic phase was washed twice with equal volumes of deionized water to a neutral pH, and the excess ECH, acetone and water were evaporated from the washed resin solution. The resin product (117.5 g) has a viscosity of 146.7 poises at 25 °C. Wet analysis gave 191.1 EEW and 0.023 %w Sap Cl. Analysis by HPLC gave estimated 187.0 EEW and 0.024 %w Sap Cl.

Example 3

In the first stage, 82.2 g of BPA and 366.5 g of epichlorohydrin (11:1 molar ECH to BPA) were mixed and heated to 69 °C in a set-up similar to that described in Example 1. 43.4 g of 12.2 weight per cent NaOH solution was added to the above well-stirred mass in 13 minutes, followed by 3-1/4 minutes hold before the first brine separation was performed. In the second stage, the organic phase was added 292.7 g of acetone (about 14:1 molar acetone to BPA) and the reaction temperature was raised to 66 °C before a second portion of 12.2 weight per cent NaOH solution (130.5 g) was added to the well-mixed reaction mass in 6 minutes. The resulting mixture was agitated for 4 minutes before a second brine separation was performed. To the organic phase was added a third portion of 20 weight per cent NaOH solution (39.6 g) in 2 minutes followed by 8 minutes hold before a third brine separation was performed. Finally, the last portion of the 20 weight per cent NaOH solution (13.2 g) was added in 2 minutes and was held for 8 minutes before the last brine separation. The average temperature in the reaction was maintained at about 72 °C. The separated organic phase was washed twice with deionized water to a neutral pH, and the washed solution was heated and all volatiles stripped to yield 109.6 g of a resin product having a viscosity of 95.2 poises at 25 °C. The HPLC estimated EEW was 181.5 and the Sap Cl was 0.050 weight per cent. This example showed both viscosity and Sap Cl improvement using the delayed cosolvent addition technique over that described in Example 1.

Example 4

In the first stage, 82.2 g of BPA and 365.9 g of epichlorohydrin (11:1 molar ECH to BPA) was mixed and heated to 71 °C in a set-up similar to that described in Example 1. 43.3 g of 12.2 weight per cent NaOH solution was added to the above well-stirred mass in 17-1/3 minutes, followed by 4-1/3 minutes hold. Without brine separation, in the second stage, 292.8 g of acetone (14:1 molar acetone to BPA) and 50.7 g of H₂O were added to this reaction mass, and reaction temperature was raised to 70 °C before a second portion of 20 weight per cent NaOH solution (79.1 g) was added to the well stirred mass in 6 minutes. The resulting mass was mixed for another 4 minutes and the first brine separation was performed. To the organic mixture, a third portion of 20 weight per cent NaOH solution (39.6 g) was added in 2-1/4 minutes at 72 °C, followed by 9 minutes hold before a second brine separation. The last portion of 20 weight per cent NaOH solution (13.2 g) was added to the organic phase at 72 °C in 2-1/3 minutes and the resulting mixture was held for 9-1/2 minutes before the last brine separation. The separated resin solution was washed twice with deionized water to a neutral pH, and the volatiles were removed from the resin product by vacuum evaporation. The resin product had a viscosity of 88.6 poises at 25 °C. The HPLC estimated EEW was 181.2 and the Sap Cl was 0.067 weight per cent. This example showed both viscosity and Sap Cl improvement using the delayed cosolvent addition technique over that described in Example 1.

Example 5

In the first stage, 82.0 g of BPA and 266.2 g of epichlorohydrin (8:1 molar ECH to BPA) was mixed and heated to 95 °C as described in Example 1. 43.3 g of 12.2 weight per cent NaOH solution was added to the above well-stirred mass in 17-1/4 minutes followed by 4-1/3 minutes hold. Without brine separation, in the second stage, 212.9 g of acetone (10.2:1 molar acetone to BPA) and 50.7 g of $H_2O$ were added to this reaction mass, and reaction temperature was raised to 72 °C before a second portion of 20 weight per cent NaOH solution (79.1 g) was added to the well-stirred mass in 6 minutes. The resulting mass was mixed for another 4 minutes and the first brine separation was performed. To the organic mixture, a third portion of 20 weight per cent NaOH solution (39.6 g) was added at 72 °C in 2-1/3 minutes followed by 9-1/3 minutes hold before a second brine separation. The last portion of 20 weight per cent NaOH solution (13.2 g) was added at 72 °C to the organic phase in 2-1/2 minutes and held for 10 minutes before the last brine separation. The separated organic phase was washed twice with deionized water to a neutral pH, and the volatiles were removed from the resin product by vacuum evaporation. The resin product had a viscosity of 111.1 poises at 25 °C, the HPLC estimated EEW was 185.4, and the Sap Cl was 0.046 weight per cent. This example showed viscosity improvement using the delayed cosolvent addition technique over that described in Example 2.

Example 6 (comparative)

82.1 g of BPA, 266.1 g of epichlorohydrin (8:1 molar ECH to BPA), 212.9 g of t-butanol (8:1 molar TBA to BPA) and 67.6 g of $H_2O$ were mixed and heated to 60 °C in a set-up similar to that described in Example 1. 158.3 g of 20 weight per cent NaOH were divided into 4 portions: 79.2 g, 59.4 g, 13.2 g, and 6.6 g. The first portion of caustic was added to the above well-stirred reaction mass in 8 minutes followed by 2 minutes hold before the first brine separation. The second, third, and fourth portions of caustic were similarly added to the organic phase in 6 minutes (and 4 minutes hold), 2 minutes (and 8 minutes hold), and 2 minutes (and 8 minutes hold), respectively. Each addition was made after brine separation. The resulting organic phase from the fourth brine separation was washed with deionized water twice to a neutral pH, and the volatiles were removed from the resin product by vacuum evaporation. The resin product had a viscosity of 120.7 poises at 25 °C, the HPLC estimated EEW was 185.6, and the Sap Cl was 0.031 weight per cent. The corresponding wet analysis gave 189.3 EEW and 0.037 weight per cent Sap Cl.

Example 7

In the first stage, 31.8 g of BPA and 103.1 g of epichlorohydrin (8:1 molar ECH to BPA) were mixed and heated to 60 °C in a set-up similar to that described in Example 1. 18.7 g of 12.2 weight per cent NaOH was added to the above well mixed reaction mass in 13.3 minutes followed by 3.4 minutes hold. After brine separation in the second stage, 82.5 g of t-butanol (8:1 TBA to BPA) was added to the organic phase and the mixture was heated to 60 °C reaction temperature. A second portion of 12.2 weight per cent NaOH solution (55.9 g) was added to this mixture in 6 minutes followed by 4 minutes hold before the second brine separation. The third (15.3 g) and fourth (5.1 g) portions of 20 weight per cent NaOH solution were similarly added to the organic phase in 2 minutes (and 8 minutes hold), respectively, after brine separation between the substages. The separated organic phase was washed twice with water to a neutral pH and the volatiles were removed from the washed resin solution to give 39.9 g of 99.8 poises resin product viscosity at 25 °C. The HPLC estimated EEW was 185.6 and the Sap Cl was 0.010 %w. This example showed viscosity and Sap Cl improvement using the delayed cosolvent addition technique over that described in Example 6.

Example 8

In the first stage, 82.0 g of BPA and 199.6 g of epichlorohydrin (6:1 molar ECH to BPA) were mixed and heated to 60 °C as described in Example 1. 43.3 g of 12.2 weight per cent NaOH solution was added to the above mixture in 20-3/4 minutes followed by 5-1/4 minutes hold. Without brine separation, in the second stage, 212.9 g of t-butanol - (about 8:1 molar TBA to BPA), 66.5 g of epichlorohydrin (about 2:1 molar ECH to BPA) and 50.7 g of water were then mixed with the above reaction mass and the reaction temperature was raised to 60 °C. A second portion of 20 %w NaOH solution - (79.1 g) was added to the above mixture in 6 minutes, followed by 4 minutes hold before the first brine separation. To the organic phase was added another 39.6 g of 20 weight per cent NaOH solution in 2-1/3 minutes, followed by 9-1/3 minutes hold before the second brine separation. The last portion of 20 weight percent NaOH solution (13.2 g) was added to the organic phase in 2-1/2 minutes, followed by 10 minutes hold. Following the last brine separation, the organic phase was washed with deionized water twice to a neutral pH. The volatiles were vacuum removed to yield a 105.7 poises resin product at 25 °C. The HPLC estimated EEW was 182.3 and the Sap Cl was 0.017 %w. This case showed product viscosity and Sap Cl improvement using the delayed cosolvent addition technique over that described in comparative Example 6, even though there was a significant amount of ECH in the t-butanol/water solvent. This simulates a condition of incomplete t-butanol/ECH separation when fractionating t-butanol and ECH from the resin product in the washed resin solution for recycle.

**Claims**

1. A process for preparing a liquid epoxy resin by reacting a dihydroxyphenyl hydrocarbon with an excess of epihalohydrin in the presence of an aqueous caustic, characterized in that the process is carried out in two stages of which in stage (1) the reaction is carried out in the absence of an organic cosolvent and the reaction is effected to yield a product mixture comprising from 10 to 60% unconsumed hydroxyl moieties and of which in stage (2) the reaction is effected in the presence of at least 2.5 mole of organic cosolvent per mole dihydroxyphenyl hydrocarbon.

2. The process of claim 1 in which the total aqueous caustic present in each of the first and second stage is from 0.2 to 0.5 mole per mole of dihydroxyphenyl hydrocarbon.

3. The process of claim 1 or 2 in which the first stage is carried out at a temperature of from 70 °C to 95 °C and a pressure of from 100 to 400 kPa and the second stage is carried out at a temperature of from about 60 °C to about 90 °C and a pressure of from 100 to 400 kPa.

4. The process as claimed in any one of claims 1 to 3 in which the aqueous caustic present during the first stage is gradually added over more than 50% of the time of the first stage.